(19) Europäisches Patentamt
European Patent Office
Office européen des brevets

(11) **EP 1 790 846 A2**

(12) **EUROPÄISCHE PATENTANMELDUNG**

(43) Veröffentlichungstag:
**30.05.2007 Patentblatt 2007/22**

(51) Int Cl.:
*F02D 41/38* (2006.01)     *F02D 41/40* (2006.01)

(21) Anmeldenummer: 06124218.6

(22) Anmeldetag: **16.11.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **28.11.2005 DE 102005056704**

(71) Anmelder: **SIEMENS AKTIENGESELLSCHAFT**
**80333 München (DE)**

(72) Erfinder:
• **Klesse, Christoph**
  **93086, Wörth A.D.Donau (DE)**
• **Procksch, Andreas**
  **90469, Nürnberg (DE)**
• **Taudt, Christian**
  **93059, Regensburg (DE)**

(54) **Verfahren zur Erzielung einer vorgesehenen Einspritzmenge von Kraftstoff in einen Verbrennungsmotor**

(57) Aufgrund des Pumpvorganges der Hochdruckpumpe treten im Rail eines Common-Rail-System Schwankungen des Druckes (23) (Pumpenpulsationen) auf. Diese Pumpenpulsationen (22) verhindern für Einspritzungen (11, 12, 13, 14) das präzise Erzielen einer vorgesehenen Einspritzmenge. Die Konsequenzen davon sind schlechte Schadstoffwerte eines Verbrennungsmotors. Um eine vorgesehene Einspritzmenge möglichst präzise zu erreichen wird ein Verfahren vorgeschlagen, welches durch Pumpenpulsationen verursachte Schwankungen des Massenstroms durch den Injektor kompensiert durch eine Anpassung der Einspritzdauer. Das Verfahren ist anwendbar auf einspritzsynchrone und nicht einspritzsynchrone Common-Rail-Systeme.

**FIG 5**

EP 1 790 846 A2

**Beschreibung**

Die vorliegende Erfindung betrifft ein Verfahren zur Erzielung einer vorgesehenen Einspritzmenge von Kraftstoff in einen Verbrennungsmotor nach dem Oberbegriff des Patentanspruchs 1.

Um in einem Verbrennungsmotor, im Folgenden auch Motor genannt, möglichst gute Abgaswerte zu erreichen, müssen je nach Last an dem Motor optimale Parameter für die Einspritzung des Kraftstoffes eingestellt werden. Insbesondere ist es auch wichtig, die zur optimalen Verbrennung notwendige Kraftstoffmenge einer Einspritzung genau zu erzielen. Im Folgenden wird für den Begriff "Kraftstoffmenge einer Einspritzung" auch der Begriff "Einspritzmenge" verwendet.

Bei einem Common-Rail-System wird der Kraftstoff mittels einer Hochdruckpumpe in einem Rail, welches typischerweise als Hochdruckspeicher und Rohrleitungssystem ausgebildet ist, komprimiert. Über Injektoren wird der Kraftstoff in die Zylinder eines Verbrennungsmotors eingespritzt. Common-Rail-Systeme werden meist für Dieselmotoren verwendet.

Aufgrund des Pumpvorganges der Hochdruckpumpe treten im Rail Schwankungen des Druckes auf. Der Begriff "Pumpenpulsationen" wird synonym "für Schwankungen des Druckes im Rail aufgrund des Pumpvorganges der Hochdruckpumpe" verwendet. Für die normalerweise verwendeten Kolben-Hochdruckpumpen beispielsweise, rühren die Pumpenpulsationen von den Bewegungen der Kolben her und führen bei konstanter Drehzahl der Hochdruckpumpe zu regelmässig wiederkehrenden Schwankungen des Druckes in dem Rail.

Die Schwankungen des Druckes im Rail haben für die Einspritzungen Schwankungen der Einspritzmenge und somit verschlechterte Abgaswerte zur Folge.

Die Problematik der Schwankungen von Einspritzmengen kann mittels Kolben-Hochdruckpumpen angegangen werden, welche zeitlich versetzt arbeitende Kolben aufweisen. Dadurch gleichen sich die von unterschiedlichen Kolben stammenden Pumpenpulsationen teilweise aus. Solche Pumpen sind jedoch in der Herstellung aufwändig und weisen ein höheres Gewicht auf.

Der vorliegenden Erfindung liegt daher die Aufgabe zugrunde, eine vorgesehene Einspritzmenge von Kraftstoff in einen Motor mittels eines Common-Rail-Systems zu erzielen, wobei insbesondere der Einfluss von Pumpenpulsationen auf die Genauigkeit der Einspritzmenge verringert wird.

Diese Aufgabe wird durch die im Patentanspruch 1 angegebenen Merkmale gelöst. Vorteilhafte Ausgestaltungen der Erfindung sind in den abhängigen Ansprüchen angegeben.

Erfindungsgemäss wird im Verfahren zur Erzielung einer vorgesehenen Einspritzmenge von Kraftstoff in einen Motor mittels eines Common-Rail-Systems Kraftstoff in einem Rail durch eine Hochdruckpumpe komprimiert. Mindestens ein an das Rail angeschlossener Injektor spritzt Kraftstoff in einen Zylinder ein. Aufgrund von durch die Hochdruckpumpe verursachten Pumpenpulsationen können für zwei unterschiedliche Einspritzungen zwei unterschiedliche Drücke in dem Rail auftreten. Aufgrund der unterschiedlichen Drücke treten für die zwei Einspritzungen unterschiedliche Massenströme durch den Injektor auf. Dabei wird für mindestens eine der Einspritzungen eine aus den unterschiedlichen Drücken resultierende Schwankung des Massenstroms durch den Injektor durch eine Anpassung der Einspritzdauer kompensiert. Dadurch kann eine vorgesehene Einspritzmenge von Kraftstoff in einen Motor mittels eines Common-Rail-Systems erzielt werden.

Dank des erfindungsgemässen Verfahrens können für Einspritzungen die vorgesehenen Einspritzmengen genauer getroffen werden, wodurch die Abgaswerte von Verbrennungsmotoren mit einem Common-Rail-System verbessert werden.

Die folgenden Vorteile können sich zusätzlich ergeben:

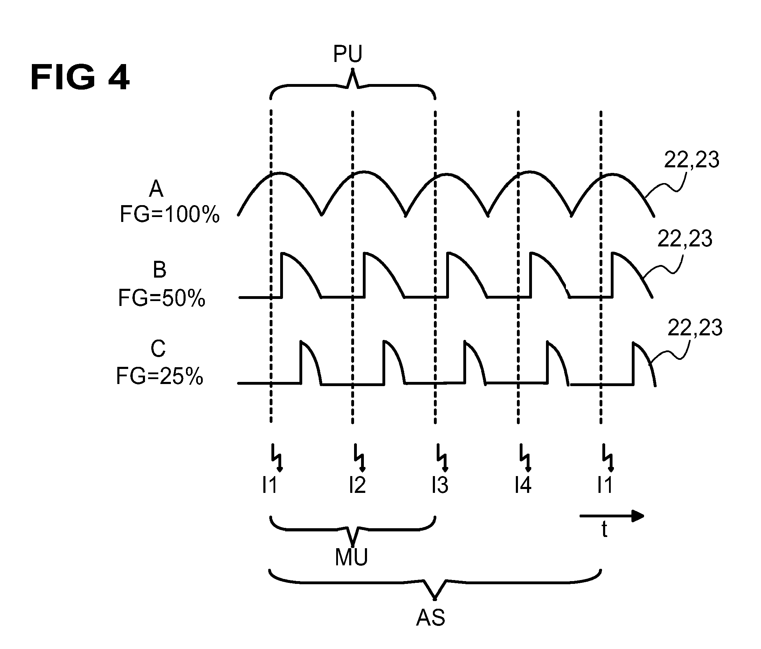

Im einspritzsynchronen Betrieb wird die Hochdruckpumpe durch den Verbrennungsmotor in einem Antriebsverhältnis angetrieben, welches unter der Voraussetzung konstanter Betriebsparameter keine durch Pumpenpulsationen verursachte Schwankungen der Druckbedingungen im Rail von Einspritzung zu Einspritzung zur Folge hat. Insbesondere führt der einspritzssynchrone Betrieb unter der Voraussetzung konstanter Betriebsparameter zu keinen Schwankungen für Einspritzungen unterschiedlicher Zylinder (vgl. Figur 4). Beispielsweise ist für eine Kolben-Hochdruckpumpe mit einer Anzahl $z_p$ Kolben, welche von einem 4-Takt-Hubkolbenmotor mit einer Anzahl $z_m$ Zylindern angetrieben wird, ein einspritzsynchroner Betrieb gegeben, wenn das Antriebsverhältnis $v$ der Pumpendrehzahl $n_p$ zu Motorendrehzahl $n_m$

$$v = \frac{n_p}{n_m} = \frac{z_m}{z_p} \cdot \frac{k}{2}$$

beträgt, wobei k eine natürliche Zahl ist (k=1,2,3,...) .

In der alltäglichen Praxis werden die Betriebsparameter, insbesondere die Kraftstoffzufuhr zu der Hochdruckpumpe und der Einspritzbeginn je nach Last und/oder Drehzahl angepasst. Dies führt auch für den einspritzsynchronen Betrieb zu zeitlich ändernden Druckbedingungen für die Einspritzungen, da unter den angepassten Betriebsparametern Einspritzungen beispielsweise von einem Druckberg einer Pumpenpulsation in ein Drucktal verlagert werden können. Im einspritzsynchronen Betrieb wirken sich die angepassten Betriebsparameter jedoch auf alle Zylinder gleich aus. Dadurch können im einspritzsynchronen Betrieb Schwankungen des Massestroms mit nur einem Korrekturkennfeld kompensiert werden.

Wird jedoch die Hochdruckpumpe einspritzasynchron zum Motor betrieben, so können sich aufgrund von Pumpenpulsationen für Einspritzungen in unterschiedliche Zylinder unterschiedliche Druckbedingungen in dem Rail ergeben, selbst wenn konstante Betriebsparameter vorliegen. Um eine vorgesehene Einspritzmenge genau zu erzielen, können die aus den unterschiedlichen Drücken resultierenden unterschiedlichen Massenströme der Einspritzungen durch eine Anpassung der Einspritzdauer kompensiert werden.

Unter den Begriff einspritzasynchroner Betrieb fällt insbesondere Antriebsverhältnis, bei welchem Pumpenpulsationen zu unterschiedlichen Druckbedingungen für Einspritzungen in unterschiedliche Zylinder führen. Eine spezielle Form des einspritzasynchronen Betriebs ist dann gegeben, wenn für Einspritzungen in einen festen Zylinder die Einspritzung immer auf die gleiche Phasenlage der Pumpenpulsationen zu liegen kommt. Unter der Voraussetzung konstanter Betriebsparameter führen Pumpenpulsationen in diesem Fall zu keinen Druckschwankungen. Die Einspritzdauer muss in diesem Fall für jeden Zylinder nur mit der Änderung der Betriebsparameter, beispielsweise einem veränderten Fördergrad angepasst werden, nicht jedoch von Einspritzung zu Einspritzung.

Um Energie zu sparen und den Kraftstoff nicht unnötig aufzuheizen, wird eine Hochdruckpumpe normalerweise bedarfsgeregelt und sauggedrosselt betrieben. Dazu wird die Kraftstoffzufuhr zu der Hochdruckpumpe, je nach Kraftstoffbedarf des Motors mittels einer Drossel begrenzt. Der Fördergrad gibt an, zu welchem Prozentsatz die Hochdruckpumpe mit Kraftstoff befüllt wird. Unter dem sauggedrosselten Betrieb versteht man einen Betrieb, bei dem der Fördergrad begrenzt wird, beispielsweise zur Anpassung an einen veränderten Betriebspunkt.

Der sauggedrosselte Betrieb führt in der Regel zu besonders abrupten Pumpenpulsationen, wodurch sich die Problematik der Schwankungen von Einspritzmengen zusätzlich verschärft. Das erfindungsgemässe Verfahren ist geeignet auch solch abrupte Pumpenpulsationen zu kompensieren, indem die Einspritzdauer in Abhängigkeit des Fördergrades angepasst wird.

Während des Betriebs eines Fahrzeugs schwankt die Temperatur in dem Rail normalerweise zwischen 40°C und 90°C. Bei Kaltstart- beziehungsweise Heissstartbedingungen kann die Railtemperatur sogar zwischen -25°C und 120°C liegen. Mit dem erfindungsgemässen Verfahren kann eine vorgesehene Einspritzmenge derart genau erzielt werden, dass letztendlich nur noch Temperaturänderungen des Kraftstoffs hauptsächliche Ursache von Schwankungen in der effektiven Einspritzmenge sind. Dabei bleiben durch Mehrfacheinspritzungen verursachte Schwankungen im Raildruck unberücksichtigt.

Die Temperaturänderungen können beispielsweise aufgrund der Wärmeausdehnung zu weiteren Abweichungen der vorgesehenen Einspritzmenge führen. Auch diese Abweichungen können durch eine Anpassung der Einspritzdauer kompensiert werden.

Die Erfindung wird nachfolgend schematisch anhand der Zeichnung beispielsweise näher erläutert. Dabei zeigen:

Figur 1A, 1B, 1C          einen Vergleich von Einspritzungen während unterschiedlicher Phasen einer Pumpenpulsation;

Figur 2A, 2B, 2C, 2D    Messungen von Einspritzmengen für je drei Einspritzungen;

Figur 3A                        Einspritzmengen in Abhängigkeit des Einspritzbeginnes

Figur 3B      den zeitlichen Zusammenhang von Pumpenpulsation und Einspritzung für die in Figur 3a dargestellten Einspritzmengen;

Figur 4      Einspritzungen und Druckbedingungen eines einspritzsynchronen 4-Zylindermotors im zeitlichen Verlauf;

Figur 5      Einspritzungen und Druckbedingungen eines 4-Zylindermotors mit unterschiedlichen Druckbedingungen für Einspritzungen in unterschiedliche Zylinder im zeitlichen Verlauf.

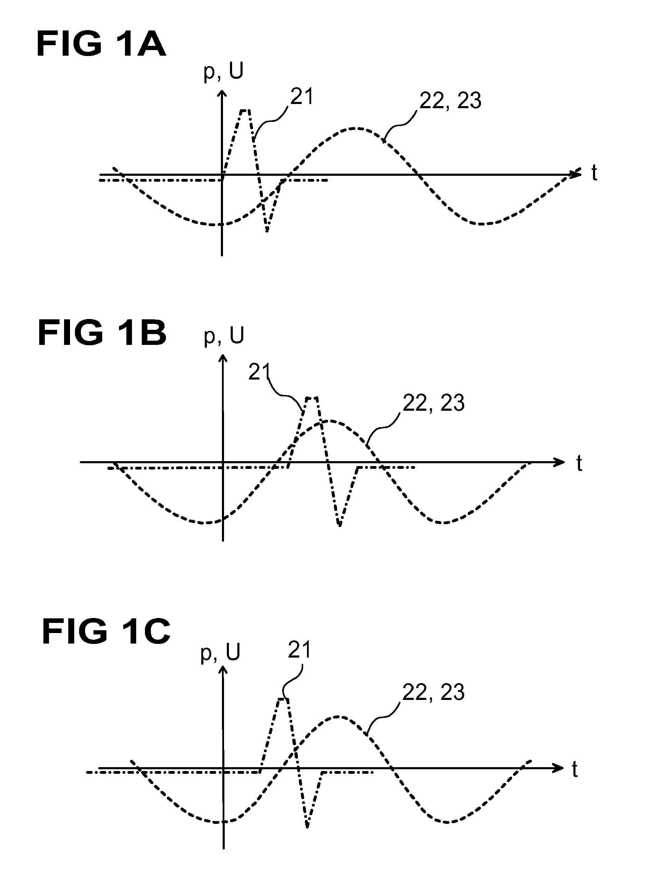

In den Figuren 1A, 1B und 1C sind jeweils der zeitliche Verlauf eines Ansteuerungssignals 21 eines Injektors und der zeitliche Verlauf des Drucks 23 in einem Rail abgebildet. Dabei werden durch Pumpenpulsation verursachte Schwankungen des Drucks 23 vereinfacht als Sinuskurve dargestellt. Der Raildruck 23 setzt sich aus einem konstanten nicht dargestellten Nominaldruck und diesen Druckschwankungen zusammen. Der zeitliche Druckverlauf ist in den drei Figuren gleich. Die Form des zeitlichen Verlaufs des Signals 21 in den drei Figuren ist ebenfalls gleich, jedoch erfolgt die Einspritzung in Figur 1A in einem Drucktal, in Figur 1B in einem Druckberg und in Figur 1C um den Nominaldruck, d.h. der Einspritzbeginn ist in den drei Figuren verschieden.

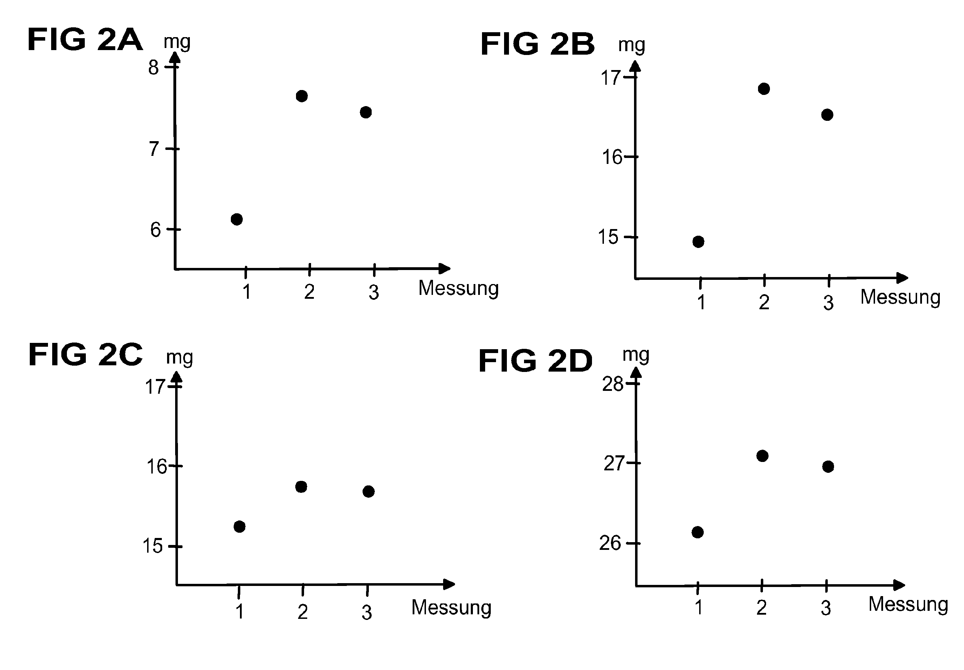

In den Figuren 2A bis 2D sind jeweils drei Messpunkte eingezeichnet. Auf der Ordinate ist die bei der Einspritzung tatsächlich eingespritzte Kraftstoffmenge in Milligramm [mg] aufgetragen. Die Abszisse gibt die Reihenfolge der durchgeführten Messung wieder. Die Messung 1 erfolgt in einem Drucktal, wie in Figur 1A abgebildet ist. Die Messung 2 erfolgt in einem Druckberg (siehe Figur 1B) und die Messung 3 erfolgt um den Nominaldruck (siehe Figur 1C). Die Reihenfolge der Messungen ist willkürlich gewählt. Diese drei Messungen wurden bei unterschiedlichen Betriebsbedingungen durchgeführt:

Figur 2A: np=1000 1/min; p= 20 MPa; ti = 0,8 ms
Figur 2B: np=1000 1/min; p=20MPa; ti=1,6 ms
Figur 2C: np=1000 1/min; p=40MPa; ti=0,8 ms
Figur 2D: np=1000 1/min; p=40MPa; ti=1,6 ms

Dabei steht $n_p$ für die Motordrehzahl, p für den Raildruck und ti für die Einspritzdauer.
Anhand der Figuren 2A, 2B, 2C und 2D zeigt sich, dass Pumpenpulsationen zu deutlichen Schwankungen der Einspritzmengen führen, wobei eine Einspritzung während eines Druckbergs zu einer vergleichsweise geringen Abweichung zur Normeinspritzmenge (Messung 3) führt, während eine Einspritzung während eines Drucktals zu einer vergleichsweise hohen Abweichung zur Normeinspritzmenge führt.

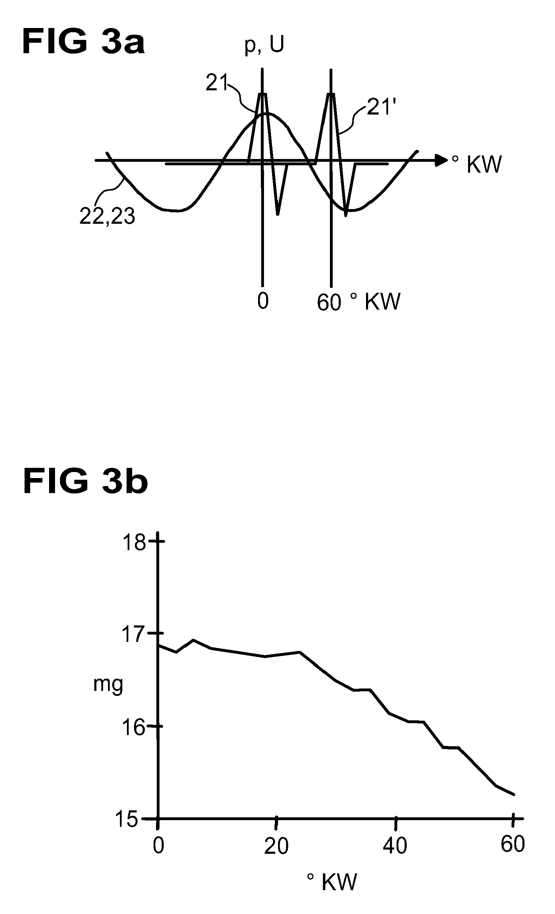

Figur 3A zeigt schematisch den zeitlichen Verlauf von Pumpenpulsationen 22. Der zeitliche Verlauf ist in Grad Kurbelwinkel eines Verbrennungsmotors angegeben. Im Folgenden wird für die Grösse " Grad Kurbelwinkel" die Abkürzung "°KW" verwendet. Der Antrieb der Hochdruckpumpe und des Motors ist so eingestellt, dass aufgrund der Pumpenpulsationen 22 der obere Totpunkt auf einem Druckberg liegt, während ein Einspritzbeginn bei 60°KW in einem Drucktal liegt. Dargestellt ist zudem ein Ansteuersignal 21, welches eine Einspritzung während eines Druckberges bei 0°KW bewirkt und ein Ansteuersignal 21' welches um 60°KW während eines Drucktals eine Einspritzung bewirkt.
Die Figur 3B zeigt gemessene Einspritzmengen (auf der Ordinate aufgetragen in Milligramm) in Abhängigkeit vom Einspritzbeginn (in Grad Kurbelwinkel aufgetragen) der Einspritzung. Dabei wurden die Einspritzdauer, der Raildruck und die Motordrehzahl $n_m$ nicht verändert. Ferner lief die Hochdruckpumpe einspritzsynchron zum Motor. Gemessen wurden von 0°Kurbelwinkel bis 60°Kurbelwinkel nach dem oberen Totpunkt OT. Solche Verschiebungen entsprechen der Praxis für einen Dieselmotor eines Strassenfahrzeugs, da je nach Last der Einspritzbeginn variiert wird. Auch hier ist eine Abweichung der Einspritzmenge von bis zu zwei Milligramm pro Einspritzung aus Figur 3B zu entnehmen.
Figur 4 zeigt schematisch Einspritzungen I1, I2, I3, I4 und Pumpenpulsationen 22 in dem Rail eines einspritzsynchronen Vier-Zylindermotors im zeitlichen Verlauf t. Als Hochdruckpumpe wird eine Kolbenpumpe mit zwei Kolben verwendet. Das Antriebsverhältnis zwischen der Hochdruckpumpe und dem Motor ist 1, pro Motorumdrehung MU vollführt die Hochdruckpumpe somit eine Pumpenumdrehung PU. Der zeitliche Verlauf ist für Fördergrade FG von 100% A, 50% B und 25% C dargestellt. Je nach Fördergrad FG ergibt sich ein unterschiedlicher zeitlicher Verlauf der Druckbedingungen 23 in dem Rail. Während eines Arbeitsspiels AS (=720°KW) findet in jedem der Zylinder jeweils mindestens eine Einspritzung I1, I2, I3, I4 statt. I1 steht dabei für eine Einspritzung in den ersten Zylinder, I2 für eine Einspritzung in den zweiten Zylinder, usw. Unter der Voraussetzung, dass konstante Betriebsparameter vorliegen, herrschen für alle Einspritzungen I1, I2, I3, I4 die selben Druckbedingungen 23 im Rail vor.
Während des Betriebes werden jedoch Betriebsparameter, insbesondere der Fördergrad FG und Einspritzbeginn angepasst. Dadurch ändern sich für die Einspritzungen I1, I2, I3, I4 die Druckbedingungen 23.
In einem ersten Ausführungsbeispiel komprimiert eine Hochdruckpumpe Kraftstoff in einem Rail. Ein an das Rail angeschlossener Injektor führt Einspritzungen I1, I2, I3, I4 in einen Zylinder eines Hubkolbenmotors aus. Die Hochdruckpumpe wird einspritzsynchron zu dem Motor betrieben. Der Injektor, die Hochdruckpumpe und ein Volumenstromregelventil, welches die Menge des Kraftstoffstroms in die Verdrängerkammern und damit den Fördergrad FG der Hochdruckpumpe regelt, werden durch eine Steuerung kontrolliert. In der Steuerung ist neben einem Kennfeld, welches die Einspritzdauer bestimmt, ein einziges Korrekturkennfeld gespeichert, welches den Betriebszustand der Hochdruckpumpe und/oder den Einspritzbeginn auf eine Korrektur in der Einspritzdauer aller Injektoren abbildet. Findet die Einspritzung I1, I2, I3, I4 während eines Druckbergs statt, so wird die Einspritzdauer anhand des Korrekturkennfeldes verkürzt, um eine vorgesehene Einspritzmenge zu erreichen. Findet die Einspritzung I1, I2, I3, I4 hingegen während eines Drucktals statt, so wird die Einspritzdauer verlängert.
Anstatt wie in dem ersten Ausführungsbeispiel ein Einspritzkennfeld und eine Korrekturkennfeld in der Steuerung zu speichern, kann die Steuerung in einem zweiten Ausführungsbeispiel in einem Kennfeld, welches die korrigierte Einspritzdauer bestimmt direkt abgelegt werden.

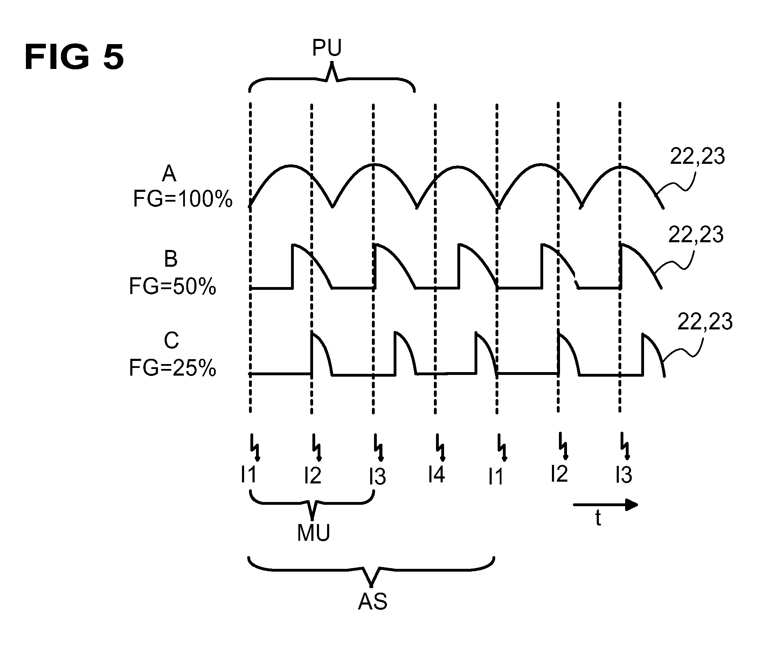

Figur 5 zeigt schematisch Einspritzungen I1, I2, I3, I4 und Pumpenpulsationen 22 im Rail eines 4-Zylindermotors im zeitlichen Verlauf t, wobei Einspritzungen I1, I2, I3, I4 in verschiedenen Zylindern bei unterschiedlichen Drücken stattfinden. Als Hochdruckpumpe wird eine Kolbenpumpe mit 2 Kolben verwendet. Das Antriebsverhältnis zwischen der Hochdruckpumpe und dem Motor beträgt 3/4, sodass auf vier Motorumdrehungen MU die Hochdruckpumpe drei Pumpenumdrehungen PU vollführt. Während eines Arbeitsspiels AS findet in jeden der Zylinder eine Einspritzung I1, I2, I3, I4 statt. Durch den einspritzasynchronen Betrieb treten selbst unter der Bedingung vollständig konstanter Betriebsparameter, insbesondere konstanter Einspritzzeit und konstantem Fördergrad FG, für Einspritzungen I1, I2, I3, I4 in unterschiedliche Zylinder aufgrund der Pumpenpulsationen 22 unterschiedliche Drücke 23 in dem Rail auf. Diese Druckschwankungen können durch unterschiedliche Fördergrade FG verstärkt werden.

In einem dritten Ausführungsbeispiel komprimiert eine Hochdruckpumpe Kraftstoff in einem Rail. Mehrere an das Rail angeschlossene Injektoren führen Einspritzungen I1, I2, I3, I4 in je einen Zylinder eines Hubkolbenmotors aus. Die Hochdruckpumpe wird in einem Antriebsverhältnis zum Motor betrieben, welches bei konstanten Betriebsbedingungen unterschiedliche Druckbedingungen für Einspritzungen von Zylinder zu Zylinder zulässt, jedoch gewährleistet, dass bei konstanten Betriebsbedingungen Einspritzungen I1, I2, I3, I4 in einen festen Zylinder unter konstanten Druckbedungen vorgenommen werden. Dieses Ausführungsbeispiel entspricht dem in Figur 5 dargestellten Schema.

Der Injektor, die Hochdruckpumpe und ein Volumenstromregelventil, welches die Menge des Kraftstoffstroms in die Verdrängerkammern und damit den Fördergrad FG der Hochdruckpumpe regelt, werden durch eine Steuerung kontrolliert. In der Steuerung ist zusätzlich zu einem Kennfeld, welches die Einspritzdauer bestimmt, für jeden Zylinder ein Korrekturkennfeld gespeichert, welches den Betriebszustand der Hochdruckpumpe und/oder den Einspritzbeginn auf eine Korrektur in der Einspritzdauer des Injektors abbildet. Findet eine Einspritzung I1, I2, I3, I4 während eines Druckbergs statt, so wird die Einspritzdauer anhand der Korrekturkennfelder verkürzt, um eine vorgesehene Einspritzmenge zu erreichen. Findet die Einspritzung I1, I2, I3, I4 hingegen während eines Drucktals statt, so wird die Einspritzdauer verlängert.

Anstatt wie in dem dritten Ausführungsbeispiel ein Einspritzkennfeld und mehrere Korrekturkennfelder für die Zylinder in der Steuerung zu speichern, kann die Steuerung in einem vierten Ausführungsbeispiel in Kennfeldern, welche die korrigierten Einspritzdauern für Einspritzungen I1, I2, I3, I4 in je einen Zylinder enthalten direkt abgelegt werden.

Auch in den im dritten und vierten Ausführungsbeispiel beschriebenen Verfahren kann eine Einspritzdauer zusätzlich an geänderte Betriebsparameter, insbesondere an einen geänderten Fördergrad FG und/oder an einen geänderten Einspritzbeginn angepasst werden, in Analogie zu dem ersten und zweiten Ausführungsbeispiel.

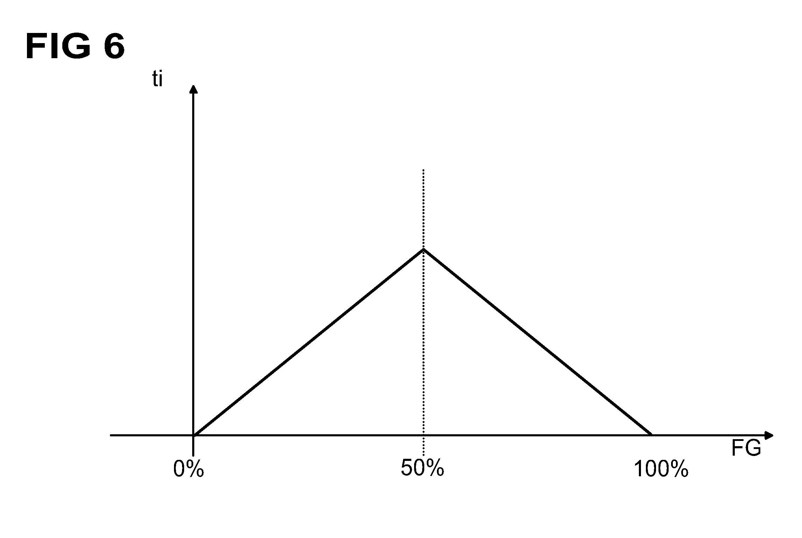

Figur 6 zeigt schematisch und beispielhaft eine einfache Funktion, welche einer Einspritzung I1, I2, I3, I4 vorgeschaltet werden kann und welche die Einspritzdauer in Abhängigkeit des Fördergrades FG anpasst. Der Fördergrad FG wird vorzugsweise über die Verstellung einer Drossel, respektive eines Volumenstromregelventils eingestellt. Üblicherweise wird das Volumenstromregelventil pulsweitenmoduliert angesteuert (PWM). Oft weisen die Pumpenpulsationen 22 bei Fördergraden FG von 0 % und 100% ein Minimum auf, während dazwischen ein oder mehrere Maxima auftreten können. Dies ist darauf zurückzuführen, dass die Auswirkungen des Aufschlags eines Kolbens auf den Kraftstoff in einer Hochdruckpumpe teilweise gefüllter Hochdruckpumpe stärkere Pumpenpulsationen 22 erzeugen als bei voller oder leerer Hochdruckpumpe. In der in Figur 6 dargestellten Funktion wurde beispielhaft von einem linearen Zusammenhang zwischen Fördergrad FG und einer Korrektur ti der Einspritzdauer ausgegangen, wobei die maximale Korrektur ti bei einem Fördergrad FG von 50% liegt.

**Patentansprüche**

1.  Verfahren zur Erzielung einer vorgesehenen Einspritzmenge von Kraftstoff in einen Motor mittels eines Common-Rail-Systems, wobei

    - eine Hochdruckpumpe in einem Rail Kraftstoff komprimiert,
    - ein oder mehrere an das Rail angeschlossene Injektoren Einspritzungen (I1, I2, I3, I4) in je einen Zylinder ausführen,
    - aufgrund von durch die Hochdruckpumpe verursachten Pumpenpulsationen (22) für mindestens zwei unterschiedliche Einspritzungen (I1, I2, I3, I4) zwei unterschiedliche Drücke (23) in dem Rail auftreten,

    **dadurch gekennzeichnet, dass**
    zur Erzielung einer vorgesehenen Einspritzmenge von Kraftstoff in den Zylinder für mindestens eine der Einspritzungen (I1, I2, I3, I4) eine aus den unterschiedlichen Drücken (23) resultierende Schwankung des Massenstroms durch den Injektor durch eine Anpassung der Einspritzdauer kompensiert wird.

2.  Verfahren nach Anspruch 1,
    **dadurch gekennzeichnet, dass**

die Hochdruckpumpe einspritzsynchron zum Motor betrieben wird.

3. Verfahren nach einem der vorhergehenden Ansprüche,
   **dadurch gekennzeichnet, dass**
   das Antriebsverhältnis v von der Pumpendrehzahl $n_p$ zu der Motorendrehzahl $n_m$

$$v = \frac{n_p}{n_m} = \frac{z_m}{z_p} \cdot \frac{k}{2}$$

beträgt, wobei die Hochdruckpumpe eine Anzahl $z_p$ Kolben umfasst, welche von einem 4-Takt-Hubkolbenmotor mit einer Anzahl $z_m$ Zylindern angetrieben wird und k eine natürliche Zahl ist (k=1,2,3,...).

4. Verfahren nach Anspruch 1,
   **dadurch gekennzeichnet, dass**
   die Hochdruckpumpe einspritzasynchron zum Motor betrieben wird.

5. Verfahren nach Anspruch 1 oder 4,
   **dadurch gekennzeichnet, dass**
   die Hochdruckpumpe derart in einem bestimmten Antriebsverhältnis zum Motor betrieben wird, dass

   - mindestens zwei unterschiedliche Einspritzungen(I1, I2, I3, I4) in zwei unterschiedliche Zylinder ausgeführt werden,
   - sodass trotz Pumpenpulsationen (22) für einen bestimmten Zylinder der Raildruck von Einspritzung (I1, I2, I3, I4) zu Einspritzung (I1, I2, I3, I4) in diesen Zylinder auf gleichem Druckniveau bleibt.

6. Verfahren nach einem der vorhergehenden Ansprüche,
   **dadurch gekennzeichnet, dass**
   das Common-Rail-System bedarfsgeregelt, insbesondere sauggedrosselt betrieben wird.

7. Verfahren nach einem der vorhergehenden Ansprüche,
   **dadurch gekennzeichnet, dass**
   der Einspritzbeginn lastabhängig verstellt wird.

8. Verfahren nach einem der vorhergehenden Ansprüche,
   **dadurch gekennzeichnet, dass**
   die Anpassung der Einspritzdauer (ti) in mindestens einem Einspritzkennfeld und/oder in mindestens einem Korrekturkennfeld zur Steuerung der Einspritzmengen enthalten ist.

9. Verfahren nach Anspruch 8,
   **dadurch gekennzeichnet, dass**
   das Korrekturkennfeld oder das Einspritzkennfeld einen Öffnungszustand eines Volumenstromregelventils, einen Saugdrosselungszustand, einen Systemdruck im Rail und/oder eine Kraftstofftemperatur im Rail auf die Einspritzdauer abbildet.

10. Verfahren nach einem der vorhergehenden Ansprüche,
    **dadurch gekennzeichnet, dass**
    zur Erzielung einer vorgesehenen Einspritzmenge von Kraftstoff in den Zylinder eine aus Temperaturänderungen des Kraftstoffs resultierenden Änderung des Massenstroms durch den Injektor durch eine Anpassung der Einspritzdauer kompensiert wird.

# FIG 1A

# FIG 1B

# FIG 1C

**FIG 2A**

**FIG 2B**

**FIG 2C**

**FIG 2D**

## FIG 3a

p, U

21

21'

° KW

22,23

0          60 ° KW

## FIG 3b

18

17

mg

16

15

0          20          40          60

° KW

# FIG 4

PU

A
FG=100%                                                                    22,23

B
FG=50%                                                                     22,23

C
FG=25%                                                                     22,23

I1          I2          I3          I4          I1

MU

AS

t

EP 1 790 846 A2

# FIG 5

EP 1 790 846 A2

# FIG 6

EP 1 790 846 A2